# EUROPÄISCHE PATENTSCHRIFT

(11) **EP 0 671 582 B1**
(45) Veröffentlichungstag und Bekanntmachung des Hinweises auf die Patenterteilung: **11.11.1998**
(21) Anmeldenummer: 95101375.4
(22) Anmeldetag: 01.02.1995
(51) Int. Cl.: F16L 11/11

(54) **Kühlflüssigkeitsleitung**
Cooling fluid pipe
Tuyau pour un fluide de refroidissement

(30) Priorität: 09.02.1994 DE 9402180 U
(43) Veröffentlichungstag der Anmeldung: 13.09.1995
(73) Patentinhaber: EMS-INVENTA AG, 8001 Zürich (CH)
(72) Erfinder: Pfleger, Wolfgang, Dipl.-Ing., CH-7015 Tamins (CH)
(74) Vertreter: Müller-Boré & Partner Patentanwälte

(56) Entgegenhaltungen:
- EP-A- 0 368 096
- DE-A- 4 321 575
- GB-A- 1 209 569
- GB-A- 1 380 663
- GB-A- 2 278 178
- US-A- 5 284 184

## Beschreibung

### Description for the following Contracting States : DE, FR, GB

Die Erfindung betrifft den in den Patentansprüchen angegebenen Gegenstand.

Die Erfindung betrifft insbesondere eine Kühlflüssigkeitsleitung mit hoher Flexibilität, Hydrolyse- und Berstdruckbeständigkeit aus mehreren Polymer-schichten mit an den Berührungsflächen der Schichten miteinander verträglichen Polymeren, wobei die Leitung mindestens in einem Teilstück gewellt ist, und mindestens einzelne benachbarte Wellungen durch mindestens einen Steg miteinander verbunden sind. Die erfindungsgemäße Kühlflüssigkeitsleitung besteht insbesondere aus mindestens einer Innen- und einer Polyamid-Außenschicht. Die Kühlflüssigkeitsleitung ist durch Coextrusion eines mehrschichtigen Rohres aus Polymeren und anschließender Ausbildung der Wellungen und der sickenförmigen Stege durch Blas- oder Saugformen herstellbar.

Kühlflüssigkeitsleitungen aus Polymeren können nach dem Stand der Technik nach den DE PS 37 15 251, 38 21 723, 40 25 300 oder 42 14 383 durch die Auswahl und die Schichtdicke des verwendeten Polymermaterials den hohen Anforderungen der Kraftfahrzeugindustrie angepaßt werden.

Ihre materialbedingte Steifheit nimmt insbesondere mit wachsender Wandstärke zu. Deshalb wurden schon Leitungen mit gewellter Wandung vorgeschlagen.

Die US 5 284 184 zeigt einen mehrschichtigen Schlauch für den Einsatz als Kraftstoffschlauch in Kraftfahrzeugen. Der Schlauch weist eine gegenüber dem zu transportierenden Medium resistente Innenschicht und eine stabile, vor Umwelteinflüssen schützende Außenschicht auf. Bei diesem Schlauch wird eine hohe Flexibilität durch einen zumindest in einem Teilbereich vorhandene Wellung erreicht. Diese Wellungen erlauben zwar eine große Biegsamkeit, lassen aber gleichzeitig eine häufig unerwünschte Längendehnung durch äußere Belastung oder Innendruckbelastung zu.

Die Wellungen haben den Nachteil, daß sie sich nicht nur unter Zugbelastung von außen, sondern auch unter Druckbelastung von innen aufweiten. Bei sich wiederholenden Druckschwankungen, wie sie insbesondere bei Kühlflüssigkeitsleitungen in der Regel in Verbindung mit starken Temperaturschwankungen auftreten, führt dies zu starken Wechselbeanspruchungen. Hieraus können Materialermüdungen resultieren, die ein vorzeitiges Versagen der Leitungen zu Folge haben.

Es ist Aufgabe der Erfindung, eine eigenstabile Kühlflüssigkeitsleitung mit hoher Hydrolyse- und Berstdruckbeständigkeit zu schaffen, die eine hohe Flexibilität bei möglichst geringen Längenänderungen aufweist und keine externen Verstärkungsmittel erfordert.

Diese Aufgabe wird durch eine Kühlflüssigkeitsleitung mit den im Anspruch 1 angegebenen Merkmale gelöst. Vorteilhafte Ausführungsformen ergeben sich aus den Unteransprüchen.

Die Erfindung betrifft daher zumindest teilweise gewellte Kühlflüssigkeitsleitungen, die jeweils zwischen zwei benachbarten Wellungen außen ein oder mehrere sickenartige Stege aufweisen.

Die Stege sind fortlaufend in einem definierten Winkel, insbesondere in einem Winkel von 90° oder 120° oder 180°, versetzt angeordnet.

Die erfindungsgemäßen Kühlflüssigkeitsleitungen sind in vorteilhafter Weise aus Polymerschichten mit verschiedenen Funktionen aufgebaut, zum Beispiel mit einer gegenüber dem Leitungsmedium inerten Innenschicht und einer gegenüber Druck- und mechanischen Einflüssen beständigen Außenschicht.

Bevorzugt sind Leitungen mit 2 Schichten aus miteinander verträglichen Polymeren. Ausführungsformen mit Innen- und Außenschichten aus Polymeren, die unbefriedigende Verträglichkeit zueinander zeigen, enthalten vorteilhafterweise eine Zwischenschicht aus Polymeren, die mit denen der Innen- und Außenschicht verträglich sind. Dafür eignen sich in vorteilhafter Weise Homo- und Copolyolefine, die funktionelle Gruppen enthalten oder aber Blends aus den verschiedenen Polymeren der zu verbindenden Schichten.

Die berstdruckbeständige Außenschicht besteht bevorzugt aus Polyamiden der Gruppe Homopolyamid, Copolyamid, deren Blends oder Mischungen untereinander oder mit anderen Polymeren, wobei Polyamide aus linearen aliphatischen Monomeren mit 6 bis 12 C-Atomen, aromatischen Monomeren, mit 6 bis 12 C-Atomen und/oder cycloaliphatischen Monomeren mit 6 bis 20 C-Atomen bevorzugt sind. Besonders bevorzugt sind PA6, PA66 und PA12.

Die Innenschicht besteht bevorzugt aus Polyolefinen. Dabei sind halogenierte und nicht halogenierte Homo- und Copolyolefine, ihre Mischungen und ihre Blends besonders bevorzugt, insbesondere solche, die funktionelle Gruppen aufweisen, welche die Verträglichkeit mit der Außenschicht bewirken. Falls diese Verträglichkeit nicht gegeben ist, bedarf es der bereits erwähnten Zwischenschicht.

Bevorzugte halogenierte Typen sind fluorierte Homo- oder Copolyolefine wie PVDF oder ETFE. Verträgliche oder verträglichmachende Polymere sind neben gepfropften Polyolefinen auch solche, die ihre funktionellen Gruppen durch geeignete Copolymermerisate, z.B. Acrylsäurederivate und -Homologe erhalten haben.

In gebräuchlichen erfindungsgemäßen Ausführungsformen weist die Wandstärke der äußeren Schicht der Kühlflüssigkeitsleitung 25 bis 95% der Gesamtwandstärke der Leitung auf. Für die Zwischenschicht, die in besonderen Ausführungsformen zusätzlich zur haftvermittelnden auch noch Barrierewirkungen haben kann, genügen in der Regel Schichtdicken um 0,1 bis 0,2 mm.

Eine besonders vorteilhafte Ausführungsform der erfindungsgemäßen Kühlflüssigkeitsleitung besteht aus einer Innenschicht, deren Polymer im wesentlichen ein mit alpha-ungesättigter Dicarbonsäure gepfroptes Copolyolefin und deren Außenschicht im wesentlichen Polyamid 12 ist. Eine andere bevorzugte Ausführungsform besteht aus einer Polyvinylidenfluorid-Innenschicht und einer PA12-Außenschicht. Die in diesem Fall notwendige Zwischenschicht ist vorteilhafterweise ein Blend aus im wesentlichen PA12 und PVDF.

Eine weitere bevorzugte Ausführungsform hat eine Innenschicht aus einem Blend aus einem Homopolyolefin, zum Beispiel Polypropylen, mit einem EPDM, das bevorzugt vernetzt ist, eine Zwischenschicht aus einem funktionalisierten Homo- oder Copolyolefin und eine Außenschicht aus PA12.

Die Polymeren der einzelnen Schichten können mit verarbeitungs- oder verwendungsbedingten Additiven nach dem Stand der Technik modifiziert sein. Dafür seien im speziellen Stabilisatoren, Weichmacher, Pigmente und Zusätze zur Schlagzähigkeits- oder Leitfähigkeits-Verbesserung genannt.

Die erfindungsgemäßen Kühlflüssigkeitsleitungen sind herstellbar durch Coextrusion ihrer Polymeren zu Rohren mit anschließender Ausbildung der Wellungen und Stege durch Saug- oder Blasformen.

Die erfindungsgemäßen Kühlflüssigkeitsleitungen weisen gegenüber gleichartigen Leitungen ohne Stege etwa 10-20 % höhere Berstdruckfestigkeiten auf. Dabei bleibt ihre Flexibilität praktisch uneingeschränkt. So ermöglichen zum Beispiel Stege, die fortlaufend um 90° versetzt sind, die gleiche Biegbarkeit der Leitung zu sehr engen Windungen. Gleichzeitig lassen sich unerwünschte Längenausdehnungen der erfindungsgemässen Leitungen weitgehend vermeiden.

Andererseits sind für definierte Berstdruckgrenzen vorteilhafte Materialeinsparungen möglich.

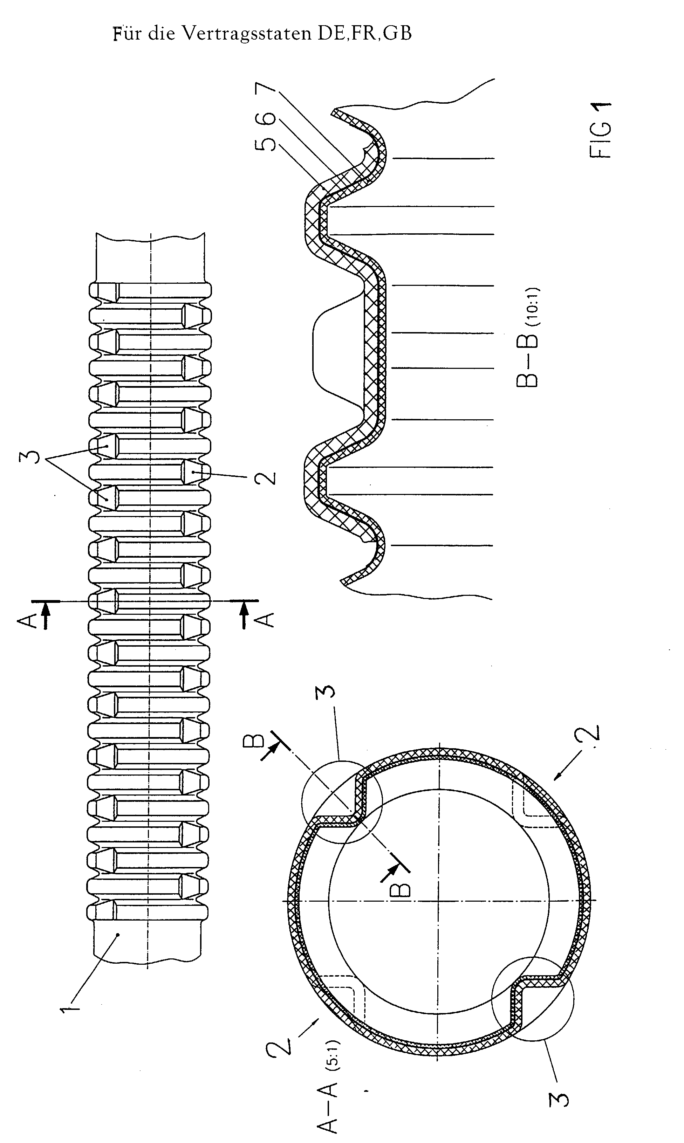

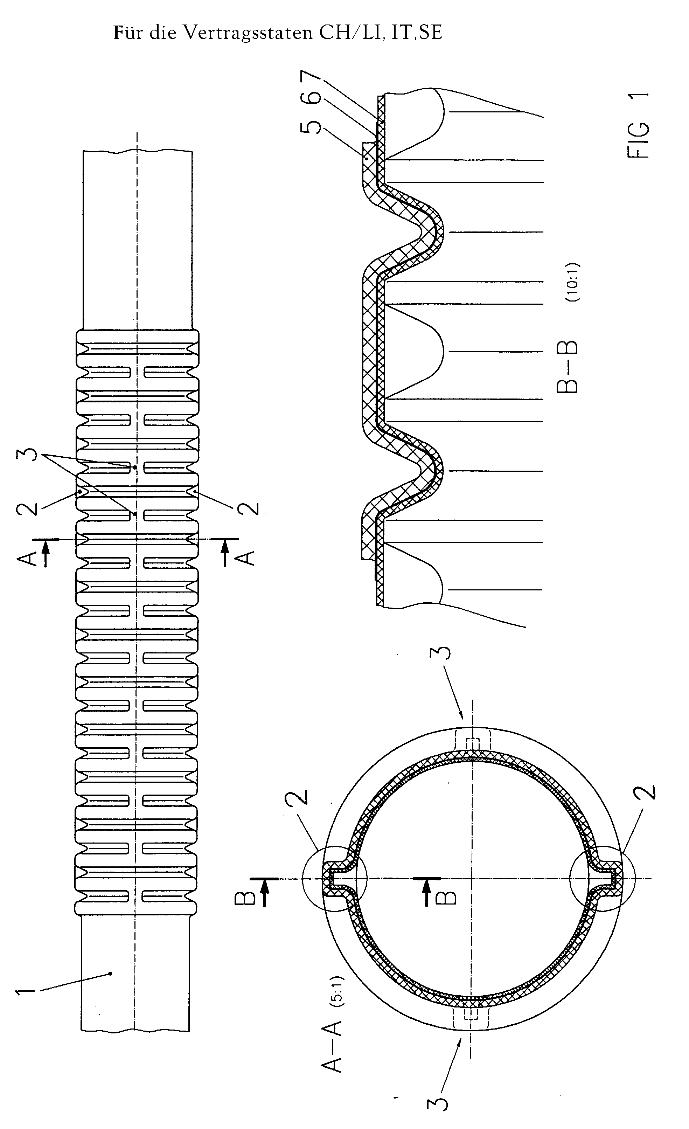

- Figur 1:: Ansicht einer dreischichtigen Kühlflüssigkeitsleitung (1) mit jeweils zwei fortlaufend um 90° versetzten Stegen an der Innen-kontur der Wellen.

Die Ansicht der gewellten dreischichtigen Kühlflüssigkeitsleitung in Fig. 1 zeigt Stege (2), die jeweils zwei benachbarte Wellungen verbinden, wobei die nachfolgenden Stege (3) auf dem Rohrumfang um 90° versetzt sind.

Im Schnitt A-A sind die sickenartigen Ausformungen der Stege (2, 3) dargestellt, während der Schnitt B-B den Längsschnitt der Kühlflüssigkeitsleitung (1) wiedergibt.

Die Aussen-, Mittel- und die Innenschicht sind als (5), (6) bzw. (7) gekennzeichnet.

### Description for the following Contracting States : CH, LI, IT, SE

Die Erfindung betrifft den in den Patentansprüchen angegebenen Gegenstand.

Die Erfindung betrifft insbesondere eine Kühlflüssigkeitsleitung mit hoher Flexibilität, Hydrolyse- und Berstdruckbeständigkeit aus mehreren Polymer-schichten mit an den Berührungsflächen der Schichten miteinander verträglichen Polymeren, wobei die Leitung mindestens in einem Teilstück gewellt ist, und mindestens einzelne benachbarte Wellungen durch mindestens einen Steg miteinander verbunden sind. Die erfindungsgemäße Kühlflüssigkeitsleitung besteht insbesondere aus mindestens einer Innen- und einer Polyamid-Außenschicht. Die Kühlflüssigkeitsleitung ist durch Coextrusion eines mehrschichtigen Rohres aus Polymeren und anschließender Ausbildung der Wellungen und der sickenförmigen Stege durch Blas- oder Saugformen herstellbar.

Kühlflüssigkeitsleitungen aus Polymeren können nach dem Stand der Technik nach den DE PS 37 15 251, 38 21 723, 40 25 300 oder 42 14 383 durch die Auswahl und die Schichtdicke des verwendeten Polymermaterials den hohen Anforderungen der Kraftfahrzeugindustrie angepaßt werden.

Ihre materialbedingte Steifheit nimmt insbesondere mit wachsender Wandstärke zu. Deshalb wurden schon Leitungen mit gewellter Wandung vorgeschlagen.

Die US 5 284 184 zeigt einen mehrschichtigen Schlauch für den Einsatz als Kraftstoffschlauch in Kraftfahrzeugen. Der Schlauch weist eine gegenüber dem zu transportierenden Medium resistente Innenschicht und eine stabile, vor Umwelteinflüssen schützende Außenschicht auf. Bei diesem Schlauch wird eine hohe Flexibilität durch einen zumindest in einem Teilbereich vorhandene Wellung erreicht. Diese Wellungen erlauben zwar eine große Biegsamkeit, lassen aber gleichzeitig eine häufig unerwünschte Längendehnung durch äußere Belastung oder Innendruckbelastung zu.

Die Wellungen haben den Nachteil, daß sie sich nicht nur unter Zugbelastung von außen, sondern auch unter Druckbelastung von innen aufweiten. Bei sich wiederholenden Druckschwankungen, wie sie insbesondere bei Kühlflüssigkeitsleitungen in der Regel in Verbindung mit starken Temperaturschwankungen auftreten, führt dies zu starken Wechselbeanspruchungen. Hieraus können Materialermüdungen resultieren, die ein vorzeitiges Versagen der Leitungen zu Folge haben.

Es ist Aufgabe der Erfindung, eine eigenstabile Kühlflüssigkeitsleitung mit hoher Hydrolyse- und Berstdruckbeständigkeit zu schaffen, die eine hohe Flexibilität bei möglichst geringen Längenänderungen aufweist und keine externen Verstärkungsmittel erfordert.

Diese Aufgabe wird durch eine Kühlflüssigkeitsleitung mit den im Anspruch 1 angegebenen Merkmale gelöst. Vorteilhafte Ausführungsformen ergeben sich aus den Unteransprüchen.

Die Erfindung betrifft daher zumindest teilweise gewellte Kühlflüssigkeitsleitungen, die jeweils zwischen zwei benachbarten Wellungen außen ein oder mehrere sickenartige Stege aufweisen.

Die Stege sind fortlaufend in einem definierten Winkel, insbesondere in einem Winkel von 90° oder 120° oder 180°, versetzt angeordnet.

Die erfindungsgemäßen Kühlflüssigkeitsleitungen sind in vorteilhafter Weise aus Polymerschichten mit verschiedenen Funktionen aufgebaut, zum Beispiel mit einer gegenüber dem Leitungsmedium inerten Innenschicht und einer gegenüber Druck- und mechanischen Einflüssen beständigen Außenschicht.

Bevorzugt sind Leitungen mit 2 Schichten aus miteinander verträglichen Polymeren. Ausführungsformen mit Innen- und Außenschichten aus Polymeren, die unbefriedigende Verträglichkeit zueinander zeigen, enthalten vorteilhafterweise eine Zwischenschicht aus Polymeren, die mit denen der Innen- und Außenschicht verträglich sind. Dafür eignen sich in vorteilhafter Weise Homo- und Copolyolefine, die funktionelle Gruppen enthalten oder aber Blends aus den verschiedenen Polymeren der zu verbindenden Schichten.

Die berstdruckbeständige Außenschicht besteht bevorzugt aus Polyamiden der Gruppe Homopolyamid, Copolyamid, deren Blends oder Mischungen untereinander oder mit anderen Polymeren, wobei Polyamide aus linearen aliphatischen Monomeren mit 6 bis 12 C-Atomen, aromatischen Monomeren, mit 6 bis 12 C-Atomen und/oder cycloaliphatischen Monomeren mit 6 bis 20 C-Atomen bevorzugt sind. Besonders bevorzugt sind PA6, PA66 und PA12.

Die Innenschicht besteht bevorzugt aus Polyolefinen. Dabei sind halogenierte und nicht halogenierte Homo- und Copolyolefine, ihre Mischungen und ihre Blends besonders bevorzugt, insbesondere solche, die funktionelle Gruppen aufweisen, welche die Verträglichkeit mit der Außenschicht bewirken. Falls diese Verträglichkeit nicht gegeben ist, bedarf es der bereits erwähnten Zwischenschicht.

Bevorzugte halogenierte Typen sind fluorierte Homo- oder Copolyolefine wie PVDF oder ETFE. Verträgliche oder verträglichmachende Polymere sind neben gepfropften Polyolefinen auch solche, die ihre funktionellen Gruppen durch geeignete Copolymermerisate, z.B. Acrylsäurederivate und -Homologe erhalten haben.

In gebräuchlichen erfindungsgemäßen Ausführungsformen weist die Wandstärke der äußeren Schicht der Kühlflüssigkeitsleitung 25 bis 95% der Gesamtwandstärke der Leitung auf. Für die Zwischenschicht, die in besonderen Ausführungsformen zusätzlich zur haftvermittelnden auch noch Barrierewirkungen haben kann, genügen in der Regel Schichtdicken um 0,1 bis 0,2 mm.

Eine besonders vorteilhafte Ausführungsform der erfindungsgemäßen Kühlflüssigkeitsleitung besteht aus einer Innenschicht, deren Polymer im wesentlichen ein mit alpha-ungesättigter Dicarbonsäure gepfroptes Copolyolefin und deren Außenschicht im wesentlichen Polyamid 12 ist. Eine andere bevorzugte Ausführungsform besteht aus einer Polyvinylidenfluorid-Innenschicht und einer PA12-Außenschicht. Die in diesem Fall notwendige Zwischenschicht ist vorteilhafterweise ein Blend aus im wesentlichen PA12 und PVDF.

Eine weitere bevorzugte Ausführungsform hat eine Innenschicht aus einem Blend aus einem Homopolyolefin, zum Beispiel Polypropylen, mit einem EPDM, das bevorzugt vernetzt ist, eine Zwischenschicht aus einem funktionalisierten Homo- oder Copolyolefin und eine Außenschicht aus PA12.

Die Polymeren der einzelnen Schichten können mit verarbeitungs- oder verwendungsbedingten Additiven nach dem Stand der Technik modifiziert sein. Dafür seien im speziellen Stabilisatoren, Weichmacher, Pigmente und Zusätze zur Schlagzähigkeits- oder Leitfähigkeits-Verbesserung genannt.

Die erfindungsgemäßen Kühlflüssigkeitsleitungen sind herstellbar durch Coextrusion ihrer Polymeren zu Rohren mit anschließender Ausbildung der Wellungen und Stege durch Saug- oder Blasformen.

Die erfindungsgemäßen Kühlflüssigkeitsleitungen weisen gegenüber gleichartigen Leitungen ohne Stege etwa 10-20 % höhere Berstdruckfestigkeiten auf. Dabei bleibt ihre Flexibilität praktisch uneingeschränkt. So ermöglichen zum Beispiel Stege, die fortlaufend um 90° versetzt sind, die gleiche Biegbarkeit der Leitung zu sehr engen Windungen. Gleichzeitig lassen sich unerwünschte Längenausdehnungen der erfindungsgemässen Leitungen weitgehend vermeiden.

Andererseits sind für definierte Berstdruckgrenzen vorteilhafte Materialeinsparungen möglich.
- Figur 1:: Ansicht einer dreischichtigen Kühlflüssigkeitsleitung (1) mit jeweils zwei um 90° versetzten Stegen an der Aussenkontur der Wellen.
- Figur 2:: Ansicht einer dreischichtigen Kühlflüssigkeitsleitung (1) mit jeweils zwei fortlaufend um 90° versetzten Stegen an der Innenkontur der Wellen.

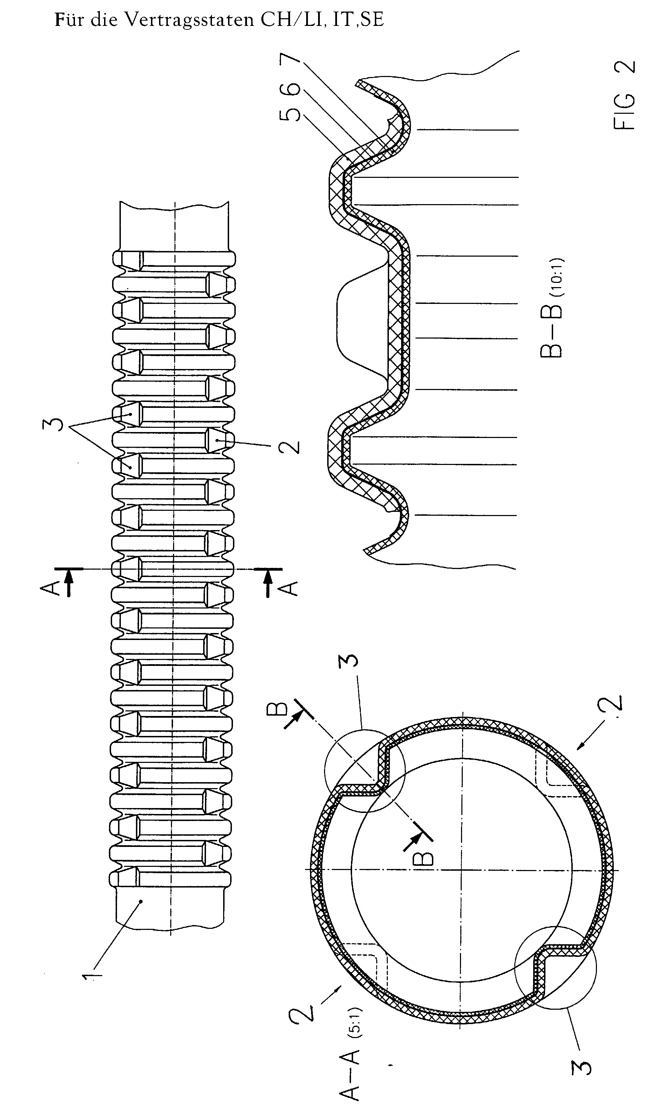

Die Ansicht der gewellten dreischichtigen Kühlflüssigkeitsleitung in Fig. 1 und Fig. 2 zeigt Stege (2), die jeweils zwei benachbarte Wellungen verbinden, wobei die nachfolgenden Stege (3) auf dem Rohrumfang um 90° versetzt sind.

Im Schnitt A-A sind die sickenartigen Ausformungen der Stege (2, 3) dargestellt, während der Schnitt B-B den Längsschnitt der Kühlflüssigkeitsleitung (1) wiedergibt.
Die Aussen-, Mittel- und die Innenschicht sind als (5), (6) bzw. (7) gekennzeichnet.

## Patentansprüche (Patentansprüche für folgende(n) Vertragsstaat(en): DE,FR, GB)

1. Kühlflüssigkeitsleitung aus mehreren Polymer-Schichten (5, 6, 7) mit an den Berührungsflächen der Schichten (5, 6, 7) miteinander verträglichen Polymeren, wobei die Leitung (1) in mindestens einem Teilstück gewellt ist, dadurch gekennzeichnet, daß
einzelne benachbarte Wellungen des Teilstücks durch mindestens einen Steg (2, 3) an der Innenkontur der Wellungen miteinander verbunden sind, die Stege (2, 3) durch eine sickenartige Verformung der Rohrwand gebildet sind,
aufeinanderfolgende Stege (2, 3) in Längsrichtung der Leitung fortlaufend um einen definierten Winkel versetzt sind und
die Stege (2, 3) parallel zur Längsachse der Leitung ausgerichtet sind.

2. Kühlflüssigkeitsleitung gemäß Anspruch 1 dadurch gekennzeichnet, daß sie aus zwei Schichten besteht.

3. Kühlflüssigkeitsleitung gemäß Anspruch 1 dadurch gekennzeichnet, daß sie aus mindestens einer Innenschicht (7), mindestens einer Zwischenschicht (6) und mindestens einer Außenschicht (5) besteht, wobei die mindestens eine Zwischenschicht (6) zusätzlich Barrierefunktion haben kann.

4. Kühlflüssigkeitsleitung gemäß einem der vorhergehenden Ansprüche dadurch gekennzeichnet, daß sie zumindest aus einer gegenüber dem transportierten Medium inerten Innenschicht (7) und einer gegenüber Druck und mechanischen Einflüssen beständigen Außenschicht (5) besteht.

5. Kühlflüssigkeitsleitung gemäß einem der vorhergehenden Ansprüche dadurch gekennzeichnet, daß die Außenschicht (5) aus einem Homopolyamid oder einem Copolyamid oder aus deren Blends oder Mischungen untereinander oder mit anderen Polymeren besteht.

6. Kühlflüssigkeitsleitung gemäß Anspruch 5, dadurch gekennzeichnet, daß die Homo- oder Copolyamide aus linearen aliphatischen Monomeren mit 6 bis 12 C-Atomen oder aus cycloaliphatischen Monomeren mit 6- bis 20 C-Atomen aufgebaut ist.

7. Kühlflüssigkeitsleitung gemäß Anspruch 5, dadurch gekennzeichnet, daß das Homopolyamid ein PA6, PA66 oder PA12 ist, wobei diese Polyamide mit verarbeitungs- oder verwendungsbedingten Additiven modifiziert sein können.

8. Kühlflüssigkeitsleitung gemäß den Ansprüchen 4 bis 7, dadurch gekennzeichnet, daß die innere Schicht (7) aus halogenierten oder nicht halogenierten Homo- oder Copolyolefinen, aus Mischungen oder Blends derselben besteht, welche funktionelle mit der äußeren Schicht (5) verträglich machende Gruppen aufweisen.

9. Kühlflüssigkeitsleitung gemäß einem der voranstehenden Ansprüche dadurch gekennzeichnet, daß die innere Schicht (7) aus mit der äußeren Schicht (5) ungenügend verträglichen halogenierten oder nicht halogenierten Homo- oder Copolyolefinen besteht und wobei eine mit diesen beiden Schichten (5, 7) verträgliche Zwischenschicht (6) angeordnet ist.

10. Kühlflüssigkeitsleitung gemäß Anspruch 9, dadurch gekennzeichnet, daß die Zwischenschicht (6) im wesentlichen ein gepfropftes Polyolefin, ein gepfropftes oder durch Copolymerisation mit funktionellen Gruppen versehenes Copolyolefin oder deren Blends mit nichtfunktionalisierten Polymeren oder ein Blend aus den miteinander zu verbindenden Polymeren und gegebenenfalls weiteren Polymeren ist.

11. Kühlflüssigkeitsleitung gemäß Anspruch 8, dadurch gekennzeichnet, daß die innere Schicht (7) aus einem Copolyolefin mit aufgepfropften alpha-ungesättigten Dicarbonsäuren, das teilweise durch ungepfropftes Polyolefin ersetzt sein kann und die äußere Schicht (5) ein modifiziertes oder unmodifiziertes PA12 ist.

12. Kühlflüssigkeitsleitung gemäß Anspruch 10, dadurch gekennzeichnet, daß die innere Schicht (7) ein PVDF, die äußere Schicht (5) ein modifiziertes PA6 oder PA12 und die Zwischenschicht (6) ein Blend aus den Polymeren der Innen- und der Außenschicht ist.

13. Kühlflüssigkeitsleitung gemäß Anspruch 10, dadurch gekennzeichnet, daß die Innenschicht (7) ein Blend aus einem Polyolefin oder Copolyolefin mit einem EPDM, die Zwischenschicht (6) ein funktionalisiertes Polyolefin oder Copolyolefin und die Außenschicht (5) ein modifiziertes oder unmodifiziertes PA12 ist.

14. Kühlflüssigkeitsleitung gemäß einem der voranstehenden Ansprüche 4 bis 13, dadurch gekennzeichnet, daß die Wandstärke der berstdruckfesten Außenschicht (5) 25 bis 95 % der Gesamtwandstärke beträgt.

15. Kühlflüssigkeitsleitung gemäß Anspruch 3, dadurch gekennzeichnet, daß die Wandstärke der Zwischenschicht (6) etwa 0,1 bis 0,2 mm beträgt.

16. Kühlflüssigkeitsleitung gemäß einem der voranstehenden Ansprüche, dadurch gekennzeichnet, daß sie durch Coextrusion eines mehrschichtigen Rohres aus Polymeren und anschließender Ausbildung der Wellungen und der sickenförmigen Stege (2, 3) durch Blas- oder Saugformen herstellbar ist.

## Patentansprüche (Patentansprüche für folgende(n) Vertragsstaat(en): CH, LI, IT, SE)

1. Kühlflüssigkeitsleitung aus mehreren Polymer-Schichten (5, 6, 7) mit an den Berührungsflächen der Schichten (5, 6, 7) miteinander verträglichen Polymeren, wobei die Leitung (1) in mindestens einem Teilstück gewellt ist, dadurch gekennzeichnet, daß
einzelne benachbarte Wellungen des Teilstücks durch mindestens einen Steg (2, 3) miteinander verbunden sind,
die Stege (2, 3) durch eine sickenartige Verformung der Rohrwand gebildet sind,
aufeinanderfolgende Stege (2, 3) in Längsrichtung der Leitung fortlaufend um einen definierten Winkel versetzt sind und
die Stege (2, 3) parallel zur Längsachse der Leitung ausgerichtet sind.

2. Kühlflüssigkeitsleitung gemäß Anspruch 1 dadurch gekennzeichnet, daß sie aus zwei Schichten besteht.

3. Kühlflüssigkeitsleitung gemäß Anspruch 1 dadurch gekennzeichnet, daß sie aus mindestens einer Innenschicht (7), mindestens einer Zwischenschicht (6) und mindestens einer Außenschicht (5) besteht, wobei die mindestens eine Zwischenschicht (6) zusätzlich Barrierefunktion haben kann.

4. Kühlflüssigkeitsleitung gemäß einem der vorhergehenden Ansprüche die zumindest aus einer gegenüber dem transportierten Medium inerten Innenschicht (7) und einer gegenüber Druck und mechanischen Einflüssen beständigen Außenschicht (5) besteht.

5. Kühlflüssigkeitsleitung gemäß einem der vorhergehenden Ansprüche bei der die Außenschicht (5) aus einem Homopolyamid oder einem Copolyamid oder aus deren Blends oder Mischungen untereinander oder mit anderen Polymeren besteht.

6. Kühlflüssigkeitsleitung gemäß Anspruch 5, bei der die Homo- oder Copolyamide aus linearen aliphatischen Monomeren mit 6 bis 12 C-Atomen oder aus cycloaliphatischen Monomeren mit 6- bis 20 C-Atomen aufgebaut ist.

7. Kühlflüssigkeitsleitung gemäß Anspruch 5, bei der das Homopolyamid ein PA6, PA66 oder PA12 ist, wobei diese Polyamide mit verarbeitungs- oder verwendungsbedingten Additiven modifiziert sein können.

8. Kühlflüssigkeitsleitung gemäß den Ansprüchen 4 bis 7, bei der die innere Schicht (7) aus halogenierten oder nicht halogenierten Homo- oder Copolyolefinen, aus Mischungen oder Blends derselben besteht, welche funktionelle mit der äußeren Schicht (5) verträglich machende Gruppen aufweisen.

9. Kühlflüssigkeitsleitung gemäß einem der voranstehenden Ansprüche bei der die innere Schicht (7) aus mit der äußeren Schicht (5) ungenügend verträglichen halogenierten oder nicht halogenierten Homo- oder Copolyolefinen besteht und wobei eine mit diesen beiden Schichten (5, 7) verträgliche Zwischenschicht (6) angeordnet ist.

10. Kühlflüssigkeitsleitung gemäß Anspruch 9, bei der die Zwischenschicht (6) im wesentlichen ein gepfropftes Polyolefin, ein gepfropftes oder durch Copolymerisation mit funktionellen Gruppen versehenes Copolyolefin oder deren Blends mit nichtfunktionalisierten Polymeren oder ein Blend aus den miteinander zu verbindenden Polymeren und gegebenenfalls weiteren Polymeren ist.

11. Kühlflüssigkeitsleitung gemäß Anspruch 8, bei der die innere Schicht (7) aus einem Copolyolefin mit aufgepfropften alpha-ungesättigten Dicarbonsäuren, das teilweise durch ungepfropftes Polyolefin ersetzt sein kann und die äußere Schicht (5) ein modifiziertes oder unmodifiziertes PA12 ist.

12. Kühlflüssigkeitsleitung gemäß Anspruch 10, bei der die innere Schicht (7) ein PVDF, die äußere Schicht (5) ein modifiziertes PA6 oder PA12 und die Zwischenschicht (6) ein Blend aus den Polymeren der Innen- und der Außenschicht ist.

13. Kühlflüssigkeitsleitung gemäß Anspruch 10, bei der die Innenschicht (7) ein Blend aus einem Polyolefin oder Copolyolefin mit einem EPDM, die Zwischenschicht (6) ein funktionalisiertes Polyolefin oder Copolyolefin und die Außenschicht (5) ein modifiziertes oder unmodifiziertes PA12 ist.

14. Kühlflüssigkeitsleitung gemäß einem der voranstehenden Ansprüche 4 bis 13, bei dem die Wandstärke der berstdruckfesten Außenschicht (5) 25 bis 95 % der Gesamtwandstärke beträgt.

15. Kühlflüssigkeitsleitung gemäß Anspruch 3, bei der die Wandstärke der Zwischenschicht (6) etwa 0,1 bis 0,2 mm beträgt.

16. Kühlflüssigkeitsleitung gemäß einem der voranstehenden Ansprüche, herstellbar durch Coextrusion eines mehrschichtigen Rohres aus Polymeren und anschließender Ausbildung der Wellungen und der sickenförmigen Stege (2, 3) durch Blas- oder Saugformen.

## Claims (Claims for the following Contracting State(s): DE, FR, GB)

1. Coolant piping made from more than one polymer layer (5, 6, 7) having, at the contact surfaces of the layers (5, 6, 7), polymers which are compatible with one another, where at least one section of the pipe is corrugated, characterized in that
individual adjacent corrugations of the section are connected to one another by at least one bridging feature (2, 3) at the inside of the shaping of the corrugations,
the bridging features (2, 3) are formed by a deformation, resembling an elongate depression, in the wall of the pipe,
successive bridging features (2, 3) in a longitudinal direction along the piping are continuously displaced by a defined angle and
the bridging features (2, 3) are orientated parallel to the longitudinal axis of the piping.

2. Coolant piping according to Claim 1, characterized in that it is composed of two layers.

3. Coolant piping according to Claim 1, characterized in that it is composed of at least one inner layer (7), at least one intermediate layer (6) and at least one outer layer (5), where the at least one intermediate layer (6) may additionally have a barrier function.

4. Coolant piping according to one of the preceding claims, characterized in that it is at least composed of an inner layer (7) inert to the transported medium, and an outer layer (5) resistant to pressure and mechanical influences.

5. Coolant piping according to one of the preceding claims, characterized in that the outer layer (5) is composed of a homopolyamide or of a copolyamide or of blends or mixtures of these with one another or with other polymers.

6. Coolant piping according to Claim 5, characterized in that the homo- or copolyamides are built up from linear aliphatic monomers having from 6 to 12 carbon atoms or from cyclic aliphatic monomers having from 6 to 20 carbon atoms.

7. Coolant piping according to Claim 5, characterized in that the homopolyamide is a nylon-6, nylon-6,6 or nylon-12, where these polyamides may be modified with additives required by processing or application.

8. Coolant piping according to Claims 4 to 7, characterized in that the inner layer (7) is composed of halogenated or of non-halogenated homo- or copolyolefins, or of mixtures or blends of the same which have functional groups which bring about compatibility with the outer layer (5).

9. Coolant piping according to one of the preceding claims, characterized in that the inner layer (7) is composed of halogenated or non-halogenated homo- or copolyolefins having insufficient compatibility with the outer layer (5) and where an intermediate layer (6) is arranged which is compatible with these two layers (5, 7).

10. Coolant piping according to Claim 9, characterized in that the intermediate layer (6) is essentially a grafted polyolefin, a grafted copolyolefin or one provided with functional groups through copolymerization, or blends of these with non-functionalized polymers or a blend made from the polymers which are to be connected to one another and, if desired, other polymers.

11. Coolant piping according to Claim 8, characterized in that the inner layer (7) has been made from a copolyolefin onto which alpha-unsaturated dicarboxylic acids have been grafted and some of which may be replaced by ungrafted polyolefin, and the outer layer (5) is a modified or unmodified nylon-12.

12. Coolant piping according to Claim 10, characterized in that the inner layer (7) is a PVDF, the outer layer (5) is a modified nylon-6 or nylon-12, and the intermediate layer (6) is a blend of the polymers of the inner and the outer layer.

13. Coolant piping according to Claim 10, characterized in that the inner layer (7) is a blend of a polyolefin or copolyolefin with an EPDM, the intermediate layer (6) is a functionalized polyolefin or copolyolefin and the outer layer (5) is a modified or unmodified nylon-12.

14. Coolant piping according to one of the preceding Claims 4 to 13, characterized in that the wall thickness of the high-bursting-strength outer layer (5) is from 25 to 95% of the overall wall thickness.

15. Coolant piping according to Claim 3, characterized in that the wall thickness of the intermediate layer (6) is from about 0.1 to 0.2 mm.

16. Coolant piping according to one of the preceding claims, characterized in that it can be produced by coextruding a pipe having more than one layer and made from polymers, and then using blow moulding or vacuum forming to form the corrugations and the bridging features (2, 3) resembling elongate depressions.

## Claims (Claims for the following Contracting State(s): CH, LI, IT, SE)

1. Coolant piping made from more than one polymer layer (5, 6, 7) having, at the contact surfaces of the layers (5, 6, 7), polymers which are compatible with one another, where at least one section of the pipe is corrugated, characterized in that
individual adjacent corrugations of the section are connected to one another by at least one bridging feature (2, 3),
the bridging features (2, 3) are formed by a deformation, resembling an elongate depression, in the wall of the pipe,
successive bridging features (2, 3) in a longitudinal direction along the piping are continuously displaced by a defined angle and
the bridging features (2, 3) are orientated parallel to the longitudinal axis of the piping.

2. Coolant piping according to Claim 1, characterized in that it is composed of two layers.

3. Coolant piping according to Claim 1, characterized in that it is composed of at least one inner layer (7), at least one intermediate layer (6) and at least one outer layer (5), where the at least one intermediate layer (6) may additionally have a barrier function.

4. Coolant piping according to one of the preceding claims, which is at least composed of an inner layer (7) inert to the transported medium, and an outer layer (5) resistant to pressure and mechanical influences.

5. Coolant piping according to one of the preceding claims, wherein the outer layer (5) is composed of a homopolyamide or of a copolyamide or of blends or mixtures of these with one another or with other polymers.

6. Coolant piping according to Claim 5, wherein the homo- or copolyamides are built up from linear aliphatic monomers having from 6 to 12 carbon atoms or from cyclic aliphatic monomers having from 6 to 20 carbon atoms.

7. Coolant piping according to Claim 5, wherein the homopolyamide is a nylon-6, nylon-6,6 or nylon-12, where these polyamides may be modified with additives required by processing or application.

8. Coolant piping according to Claims 4 to 7, wherein the inner layer (7) is composed of halogenated or of non-halogenated homo- or copolyolefins, or of mixtures or blends of the same which have functional groups which bring about compatibility with the outer layer (5).

9. Coolant piping according to one of the preceding claims, wherein the inner layer (7) is composed of halogenated or non-halogenated homo- or copolyolefins having insufficient compatibility with the outer layer (5) and where an intermediate layer (6) is arranged which is compatible with these two layers (5, 7).

10. Coolant piping according to Claim 9, wherein the intermediate layer (6) is essentially a grafted polyolefin, a grafted copolyolefin or one provided with functional groups through copolymerization, or blends of these with non-functionalized polymers or a blend made from the polymers which are to be connected to one another and, if desired, other polymers.

11. Coolant piping according to Claim 8, in which the inner layer (7) has been made from a copolyolefin onto which alpha-unsaturated dicarboxylic acids have been grafted and some of which may be replaced by ungrafted polyolefin, and the outer layer (5) is a modified or unmodified nylon-12.

12. Coolant piping according to Claim 10, in which the inner layer (7) is a PVDF, the outer layer (5) is a modified nylon-6 or nylon-12, and the intermediate layer (6) is a blend of the polymers of the inner and the outer layer.

13. Coolant piping according to Claim 10, in which the inner layer (7) is a blend of a polyolefin or copolyolefin with an EPDM, the intermediate layer (6) is a functionalized polyolefin or copolyolefin and the outer layer (5) is a modified or unmodified nylon-12.

14. Coolant piping according to one of the preceding Claims 4 to 13, in which the wall thickness of the high-bursting-strength outer layer (5) is from 25 to 95% of the overall wall thickness.

15. Coolant piping according to Claim 3, in which the wall thickness of the intermediate layer (6) is from about 0.1 to 0.2 mm.

16. Coolant piping according to one of the preceding claims and capable of being produced by coextruding a pipe having more than one layer and made from polymers, and then using blow moulding or vacuum forming to form the corrugations and the bridging features (2, 3) resembling elongate depressions.

## Revendications (Revendications pour l'(les) Etat(s) contractant(s) suivant(s): DE, FR, GB)

1. Tuyau pour liquide de refroidissement, formé de plusieurs couches en polymères (5, 6, 7) avec, aux surfaces de contact des couches (5, 6, 7), des polymères compatibles entre eux, le tuyau (1) étant ondulé sur au moins un tronçon,
caractérisé en ce que
des ondulations adjacentes individuelles du tronçon ondulé sont liées entre elles par au moins une nervure (2, 3) du contour intérieur des ondulations, les nervures ou entretoises (2, 3) sont produites par une déformation à la manière d'une moulure de la paroi tubulaire,
des nervures successives (2, 3) sont décalées de façon continue d'un angle déterminé dans la direction longitudinale du tuyau et
les nervures (2, 3) sont alignées parallèlement à l'axe longitudinal du tuyau.

2. Tuyau pour liquide de refroidissement suivant la revendication 1, caractérisé en ce qu'il est constitué de deux couches.

3. Tuyau pour liquide de refroidissement suivant la revendication 1, caractérisé en ce qu'il est constitué d'au moins une couche interne (7), d'au moins une couche intermédiaire (6) et d'au moins une couche externe (5), la couche ou les couches intermédiaires (6) pouvant avoir en outre une fonction de barrière.

4. Tuyau pour liquide de refroidissement suivant l'une des revendications précédentes, caractérisé en ce qu'il est constitué d'au moins une couche interne (7) inerte vis-à-vis du fluide transporté et d'une couche externe (5) stable à la pression et aux influences mécaniques.

5. Tuyau pour liquide de refroidissement suivant l'une des revendications précédentes, caractérisé en ce que la couche externe (5) est constituée d'un homopolyamide ou d'un copolyamide ou de leurs blends ou mélanges l'un avec l'autre ou avec d'autres polymères.

6. Tuyau pour liquide de refroidissement suivant la revendication 5, caractérisé en ce que les homopolyamides ou copolyamides sont formés à partir de monomères aliphatiques linéaires ayant 6 à 12 atomes de carbone ou de monomères cycloaliphatiques ayant 6 à 20 atomes de carbone.

7. Tuyau pour liquide de refroidissement suivant la revendication 5, caractérisé en ce que l'homopolyamide est un PA6, PA66 ou PA12, ces polyamides pouvant être modifiés avec des additifs conditionnés par la mise en oeuvre ou par l'utilisation.

8. Tuyau pour liquide de refroidissement suivant les revendications 4 à 7, caractérisé en ce que la couche interne (7) est constituée d'homopolyoléfines ou de copolyoléfines halogénées ou non halogénées, de mélanges ou de blends de ces polyoléfines, qui portent des groupes fonctionnels les rendant compatibles avec la couche externe (5).

9. Tuyau pour liquide de refroidissement suivant l'une des revendications précédentes, caractérisé en ce que la couche interne (7) est constituée d'homopolyoléfines ou de copolyoléfines halogénées ou non halogénées insuffisamment compatibles avec la couche externe (5), avec interposition d'une couche intermédiaire (6) compatible avec ces deux couches (5, 7).

10. Tuyau pour liquide de refroidissement suivant la revendication 9, caractérisé en ce que la couche intermédiaire (6) consiste principalement en une polyoléfine greffée, une copolyoléfine greffée ou pourvue de groupes fonctionnels par copolymérisation ou leurs blends avec des polymères non pourvus de groupes fonctionnels ou un blend formé des polymères devant être liés l'un à l'autre et, le cas échéant, d'autres polymères.

11. Tuyau pour liquide de refroidissement suivant la revendication 8, caractérisé en ce que la couche interne (7) est formée d'une copolyoléfine porteuse d'acides dicarboxyliques alpha-insaturés greffés, qui peut être remplacée partiellement par une polyoléfine non greffée et la couche externe (5) consiste en PA12 modifié ou non modifié.

12. Tuyau pour liquide de refroidissement suivant la revendication 10, caractérisé en ce que la couche interne (7) est en PVDF, la couche externe (5) est en PA6 ou PA12 modifié et la couche intermédiaire (6) est un blend des polymères des couches interne et externe.

13. Tuyau pour liquide de refroidissement suivant la revendication 10, caractérisé en ce que la couche interne (7) est un blend d'une polyoléfine ou d'une copolyoléfine avec un EPDM, la couche intermédiaire (6) est une polyoléfine ou copolyoléfine portant des groupes fonctionnels et la couche externe (5) est un PA12 modifié ou non modifié.

14. Tuyau pour liquide de refroidissement suivant l'une des revendications 4 à 13 précédentes, caractérisé en ce que l'épaisseur de paroi de la couche externe (5) résistant à la pression d'éclatement compte pour 25 à 95 % de l'épaisseur de paroi totale.

15. Tuyau pour liquide de refroidissement suivant la revendication 3, caractérisé en ce que l'épaisseur de paroi de la couche intermédiaire (6) s'élève à environ 0,1 à 0,2 mm.

16. Tuyau pour liquide de refroidissement suivant l'une des revendications précédentes, caractérisé en ce qu'il peut être produit par coextrusion d'un tube multicouche en polymères suivie de la réalisation des ondulations et des nervures (2, 3) en forme de moulures par moulage par soufflage ou aspiration.

## Revendications (Revendications pour l'(les) Etat(s) contractant(s) suivant(s): CH, LI, IT, SE)

1. Tuyau pour liquide de refroidissement, formé de plusieurs couches en polymères (5, 6, 7) avec, aux surfaces de contact des couches (5, 6, 7), des polymères compatibles entre eux, le tuyau (1) étant ondulé sur au moins un tronçon,
caractérisé en ce que
des ondulations adjacentes individuelles du tronçon ondulé sont liées entre elles par au moins une nervure ou entretoise (2, 3), les nervures (2, 3) sont produites par une déformation à la manière d'une moulure de la paroi tubulaire,
des nervures successives (2, 3) sont décalées de façon continue d'un angle déterminé dans la direction longitudinale du tuyau et
les nervures (2, 3) sont alignées parallèlement à l'axe longitudinal du tuyau.

2. Tuyau pour liquide de refroidissement suivant la revendication 1, caractérisé en ce qu'il est constitué de deux couches.

3. Tuyau pour liquide de refroidissement suivant la revendication 1, caractérisé en ce qu'il est constitué d'au moins une couche interne (7), d'au moins une couche intermédiaire (6) et d'au moins une couche externe (5), la couche ou les couches intermédiaires (6) pouvant avoir en outre une fonction de barrière.

4. Tuyau pour liquide de refroidissement suivant l'une des revendications précédentes, qui est constitué d'au moins une couche interne (7) inerte vis-à-vis du fluide transporté et d'une couche externe (5) stable à la pression et aux influences mécaniques.

5. Tuyau pour liquide de refroidissement suivant l'une des revendications précédentes, dans lequel la couche externe (5) est constituée d'un homopolyamide ou d'un copolyamide ou de leurs blends ou mélanges l'un avec l'autre ou avec d'autres polymères.

6. Tuyau pour liquide de refroidissement suivant la revendication 5, dans lequel les homopolyamides ou copolyamides sont formés à partir de monomères aliphatiques linéaires ayant 6 à 12 atomes de carbone ou de monomères cycloaliphatiques ayant 6 à 20 atomes de carbone.

7. Tuyau pour liquide de refroidissement suivant la revendication 5, dans lequel l'homopolyamide est un PA6, PA66 ou PA12, ces polyamides pouvant être modifiés avec des additifs conditionnés par la mise en oeuvre ou par l'utilisation.

8. Tuyau pour liquide de refroidissement suivant les revendications 4 à 7, dans lequel la couche interne (7) est constituée d'homopolyoléfines ou de copolyoléfines halogénées ou non halogénées, de mélanges ou de blends de ces polyoléfines, qui portent des groupes fonctionnels les rendant compatibles avec la couche externe (5).

9. Tuyau pour liquide de refroidissement suivant l'une des revendications précédentes, dans lequel la couche interne (7) est constituée d'homopolyoléfines ou de copolyoléfines halogénées ou non halogénées insuffisamment compatibles avec la couche externe (5), avec interposition d'une couche intermédiaire (6) compatible avec ces deux couches (5, 7).

10. Tuyau pour liquide de refroidissement suivant la revendication 9, dans lequel la couche intermédiaire (6) consiste principalement en une polyoléfine greffée, une copolyoléfine greffée ou pourvue de groupes fonctionnels par copolymérisation ou leurs blends avec des polymères non pourvus de groupes fonctionnels ou un blend formé des polymères devant être liés l'un à l'autre et, le cas échéant, d'autres polymères.

11. Tuyau pour liquide de refroidissement suivant la revendication 8, dans lequel la couche interne (7) est formée d'une copolyoléfine porteuse d'acides dicarboxyliques alpha-insaturés greffés, qui peut être remplacée partiellement par une polyoléfine non greffée et la couche externe (5) consiste en PA12 modifié ou non modifié.

12. Tuyau pour liquide de refroidissement suivant la revendication 10, dans lequel la couche interne (7) est en PVDF, la couche externe (5) est en PA6 ou PA12 modifié et la couche intermédiaire (6) est un blend des polymères des couches interne et externe.

13. Tuyau pour liquide de refroidissement suivant la revendication 10, dans lequel la couche interne (7) est un blend d'une polyoléfine ou d'une copolyoléfine avec un EPDM, la couche intermédiaire (6) est une polyoléfine ou copolyoléfine portant des groupes fonctionnels et la couche externe (5) est un PA12 modifié ou non modifié.

14. Tuyau pour liquide de refroidissement suivant l'une des revendications 4 à 13 précédentes, dans lequel l'épaisseur de paroi de la couche externe (5) résistant à la pression d'éclatement compte pour 25 à 95 % de l'épaisseur de paroi totale.

15. Tuyau pour liquide de refroidissement suivant la revendication 3, dans lequel l'épaisseur de paroi de la couche intermédiaire (6) s'élève à environ 0,1 à 0,2 mm.

16. Tuyau pour liquide de refroidissement suivant l'une des revendications précédentes, pouvant être produit par coextrusion d'un tube multicouche en polymères suivie de la réalisation des ondulations et des nervures (2, 3) en forme de moulures par moulage par soufflage ou aspiration.
